(19) **Europäisches Patentamt**

**European Patent Office**

**Office européen des brevets**

(11) **EP 0 953 157 B1**

(12) **FASCICULE DE BREVET EUROPEEN**

(45) Date de publication et mention
de la délivrance du brevet:
**18.04.2001 Bulletin 2001/16**

(21) Numéro de dépôt: **98902065.6**

(22) Date de dépôt: **13.01.1998**

(51) Int Cl.⁷: **G01S 15/89**

(86) Numéro de dépôt international:
**PCT/FR98/00050**

(87) Numéro de publication internationale:
**WO 98/32031 (23.07.1998 Gazette 1998/29)**

(54) **PROCEDE DE RECALAGE D'IMAGES SONAR AU MOYEN DE SOUS-ANTENNES**

**VERFAHREN ZUM ZURÜCKSTELLEN VON SONARBILDERN MITTELS SUB-ANTENNEN**

**METHOD OF RESETTING SONAR IMAGES USING SECONDARY ANTENNAE**

(84) Etats contractants désignés:
**DE GB SE**

(30) Priorité: **17.01.1997 FR 9700487**

(43) Date de publication de la demande:
**03.11.1999 Bulletin 1999/44**

(73) Titulaire: **THOMSON MARCONI SONAR SAS
06560 Valbonne (FR)**

(72) Inventeur: **PINTO, Marc, Thomson-CSF S.C.P.I.
F-94117 Arcueil Cedex (FR)**

(56) Documents cités:
**US-A- 4 930 111          US-A- 4 987 563**

# Description

La présente invention se rapporte aux procédés de recalage des images d'un sonar à antenne synthétique, formée par le déplacement d'une antenne linéaire de transducteurs de longueur L. Tous les transducteurs sont actifs en réception et une partie d'entre eux est également active à l'émission. Les émetteurs peuvent aussi ne pas faire partie de l'antenne.

On connaît les antennes synthétiques dans lesquelles on forme une antenne virtuelle à partir des différentes positions spatiales d'une antenne physique.

Lorsque le déplacement nominal (sans erreur de mouvement) du porteur est colinéaire à l'antenne physique, on obtient une antenne linéaire synthétique. Un exemple de réalisation connu concerne les sonars latéraux d'imagerie du fond de la mer pour lesquels l'antenne synthétique permet d'améliorer considérablement la résolution latérale.

Lorsque le déplacement nominal du porteur est perpendiculaire à l'antenne physique, on obtient une antenne synthétique bidimensionnelle, souvent lacunaire. Un exemple de réalisation concerne les sonars frontaux de chasse aux mines. L'antenne synthétique permet alors un gain d'antenne supplémentaire par rapport à l'antenne physique pour améliorer les performances en détection et en classification. Cette amélioration résulte de ce que la cohérence, d'une récurrence à la suivante, de l'écho d'une mine est en général supérieure à celle d'un écho de fond, elle-même supérieure à celle du bruit.

La focalisation d'une antenne synthétique en un point F donné nécessite cependant la compensation des différences de marche aller-retour entre F et le sonar physique pour toutes les K récurrences consécutives que l'on souhaite intégrer. Or une erreur de mouvement du porteur de $\lambda/4$ entre deux récurrences consécutives, soit moins d'un millimètre pour les longueurs d'ondes usuelles en sonar classificateur de mines ($\lambda=3.75$ mm pour $f_0=400$kHz), suffit à sommer les échos issus de F en antiphase plutôt qu'en phase et donc à détruire l'antenne synthétique. L'instrumentation, par ailleurs complexe et coûteuse, n'a pas la précision requise. De plus, en présence d'erreurs de mouvement, les corrections à apporter aux différences de marche dépendent de la projection de ces erreurs dans la direction radiale de F, qui dépend du relief du fond. Or celui-ci reste inconnu lorsque l'antenne physique est, comme supposé ici, une antenne linéaire qui présente une ambiguïté conique. L'autofocalisation est alors une solution particulièrement séduisante. Elle permet de contourner les difficultés liées à la mesure séparée du déplacement du porteur, du relief du fond et du profil de célérité ultrasonore instantané. A la place on estime directement les combinaisons de ces grandeurs, à savoir les différences de marche, requises pour le problème posé.

On connaît un brevet français n° 94 11464 déposé par l'ICPI de Lyon, ayant pour inventeurs J. Chatillon et J. Magand [1], qui vise à définir un tel procédé d'autofocalisation. Contrairement à la présente invention, ce procédé ne tire pas profit de la structure multicapteurs de l'antenne physique. Il suppose de plus que la scène imagée peut être découpée en zones comportant un diffuseur unique. Il est donc inapplicable dans le cas, important en chasse aux mines, où la scène imagée ne comporte qu'une mine anéchoïque sur un fond de réverbération uniforme, par exemple un fond homogène de vase ou de sable fin (dans ce cas la mine est détectée par son ombre portée). En effet, même la plus petite zone que l'on puisse découper dans la scène imagée, qui n'est autre que la cellule de résolution du sonar, contient encore une infinité continue de diffuseurs, d'après le modèle classiquement admis pour décrire un fond de réverbération uniforme.

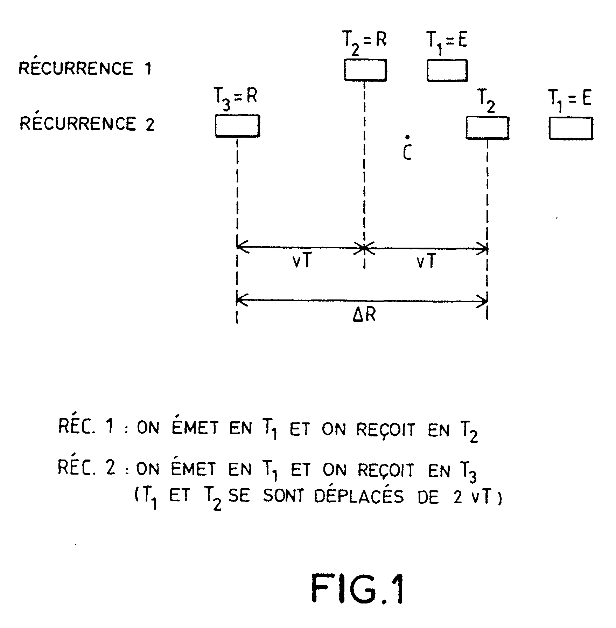

On connaît également un brevet US n° 4,224,036 délivré le 6 janvier 1981 à Westinghouse Electric Corp. ayant R.S. Raven comme inventeur, dans lequel est décrit un procédé d'autofocalisation pour un sonar latéral à antenne synthétique, qui peut opérer même sur un fond de réverbération uniforme. Ce procédé permet d'intégrer deux récurrences consécutives, l'extension au cas de K récurrences se faisant de proche en proche. Il utilise au moins un transducteur se déplaçant en réception entre ces deux récurrences. Le transducteur se déplace relativement à l'antenne physique de manière à ce que son centre de phase, défini comme le lieu géométrique milieu du centre de l'antenne d'émission et du transducteur, reste nominalement fixe relativement à l'eau. On voit sur la figure 1 qu'il faut se déplacer de $\Delta R=2vT$ dans la direction opposée au mouvement du sonar, où $vT$ est le déplacement nominal du porteur entre deux récurrences. Un tel déplacement est possible à condition que $L> 2vT$ c'est à dire que l'antenne synthétique soit spatialement suréchantillonnée.

Dans les conditions nominales les signaux aux récurrences n°1 et n°2 du transducteur déplacé sont identiques. En présence d'erreurs, on observerait, selon le procédé de ce brevet [2], un déphasage non nul entre les deux échantillons complexes relatifs aux échos d'une même case distance du fond. Ce déphasage fournirait alors la correction de phase à appliquer, case distance par case distance, aux signaux de tous les transducteurs de la récurrence n°2 pour les intégrer aux signaux de la récurrence n°1. Il faut cependant noter que l'application du procédé nécessite un recalage préliminaire, par un autre procédé non spécifié par le brevet [2], des échantillons complexes appariés dont la précision doit être une fraction de 1/B où B est la bande passante du sonar.

Ce procédé [2] décrit également une extension au cas de l'utilisation simultanée de plusieurs transducteurs déplacés. En effet, lorsque l'antenne synthétique est suffisamment suréchantillonnée spatialement, on peut déplacer en réception au moins deux transducteurs, estimer au moins deux déphasages selon la méthode précédente, et extrapoler ces estimations multiples à une loi de déphasages variant linéairement le long de l'antenne physique. On applique alors cette loi de compensation sur les signaux des transducteurs à la récurrence n°2 de manière à réaliser, outre une correction de phase constante, un dépointage électronique de l'antenne physique à la récurrence n°2.

Enfin le procédé [2] fait également mention de la possibilité de déplacer l'émetteur de 2vT, ce qui permet l'utilisation simultanée de tous les transducteurs de l'antenne physique, d'où un gain en précision. Cependant il se pose un problème, décrit par l'inventeur de [2], lorsque l'on cherche à recaler de manière continue une suite de récurrences consécutives. Ainsi le recul de l'émetteur de 2vT entre les récurrences n°1 et n°2 permet de recaler cette paire de récurrences mais pas les récurrences n°2 et n°3, car l'émetteur est arrivé en butée de l'antenne physique. On ne peut, en fait, recaler qu'une paire de récurrences sur deux.

Un autre problème, non décrit par l'inventeur de [2], est que le déplacement à l'émission annule le mouvement nominal du centre de phase du sonar physique de sorte qu'il n'y a plus de diversité spatiale, et donc aucun gain de résolution, pour l'intégration cohérente des deux récurrences ainsi recalées. L'autofocalisation s'obtient donc au détriment des performances de l'antenne synthétique ce qui n'est clairement pas souhaitable.

Les modes de déplacement à l'émission proposés dans une demande de brevet n°95 10953 déposée le 19 Septembre 1995 au nom de Thomson-CSF [3] permettent de s'affranchir de ces deux limitations. Un de ces modes utilise deux émissions auxiliaires alternées (alternance à chaque récurrence), effectuées avec des codes deux à deux distincts entre eux, et distincts du code d'émission principal, effectué avec un émetteur fixe. Les trois codes sont, par exemple, dans des sous-bandes distinctes, ce qui permet de les séparer par filtrage en réception. Alors, pour toute paire de récurrences d'une suite continue, il existe toujours une des deux sous-bandes auxiliaires dans laquelle on peut se déplacer à l'émission dans le sens opposé au mouvement du porteur. Ces déplacements étant dans des sous-bandes disjointes de l'émission principale sont de plus sans effet sur l'imagerie. Tous les types de multiplexage spectral sont possibles, par exemple ceux permettant, par battement, de réaliser deux codes auxiliaires disjoints spectralement mais de même fréquence centrale que l'émission principale.

Cependant certaines limitations fondamentales du procédé [2] subsistent. Le fait que le déplacement en réception ou à l'émission soit déterminé par le mouvement nominal vT du porteur, sans tenir compte des erreurs de mouvement, est une source d'imprécision. De plus le procédé [2] suppose que l'on peut effectuer les mêmes corrections de phase pour tous les diffuseurs F d'une même case distance. Cette condition d'isotropie des erreurs de phase est connue en optique sous le nom d'isoplanétisme. Le procédé n'est applicable que dans le cas où le secteur émission tout entier peut être considéré comme un secteur isoplanétique ce qui est, dans la pratique, une limitation, comme le montre l'exemple suivant.

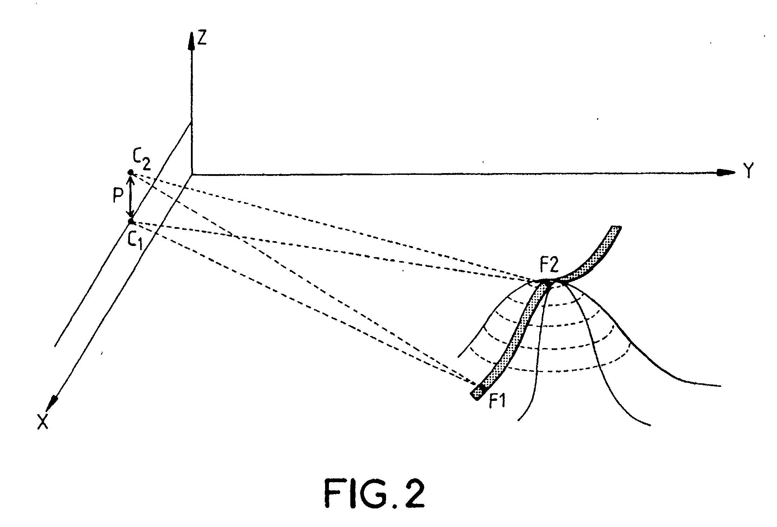

Dans un repère Oxyz comme sur la figure 2, le fond de la mer est au dessus du plan Oxy et le sonar se déplace nominalement le long de Ox. On suppose que le seul effet parasite est un pilonnement d'amplitude P le long de Oz entre deux récurrences consécutives. Ce pilonnement fait que les positions $C_1$ et $C_2$ des centres de phase d'un transducteur déplacé ne sont plus confondues. Les coordonnées selon Ox et Oy sont égales, par construction, mais il en est autrement selon Oz où le mouvement parasite conduit à une séparation verticale des deux points de P illustrée sur la figure 2. Il est alors immédiat de constater sur la figure que l'erreur de phase n'est pas la même pour les diffuseurs $F_1$ et $F_2$ de la case distance. En effet $C_1C_2$ peut être vu comme une base interférométrique synthétique le long de Oz, de résolution de $\lambda/2P$, de sorte que l'erreur de phase ne peut être supposée constante que si la variation en gisement, relativement à l'axe de la base interférométrique, des échos de la case distance, reste de l'ordre de $\lambda/16P$. Pour P=10 cm et $\lambda$=3.75 mm la variation maximale admissible est d'environ 0.1°. Il suffit donc, à la portée de 200 m et pour les incidences rasantes usuelles en chasse aux mines, d'avoir des variations d'altitude de l'ordre de 50 cm dans la case distance pour arriver aux limites du procédé. Pour un secteur d'émission de 5°, la case distance située à 200m de portée s'étend selon Ox sur plus de 20 m. Il suffit donc d'un fond plan mais incliné de 10% relativement à Oxy pour avoir des variations d'altitude de plus de 2 m. Des dunes étendues, ou des rides, dont l'amplitude est comprise entre 40 cm et 1 m, sont également fréquentes sur le fond marin. Cette analyse n'est, bien entendu, pas limitée au cas du seul pilonnement et des cases distance en limite de portée. En milieu de portée ou en début de portée, des combinaisons d'embardées et de pilonnement parasites produisent des effets identiques. Il en est de même des erreurs d'attitude. Ainsi pour $L_r$=4 m et un tangage de seulement 1,5°, on a déjà P=10 cm.

En présence de telles variations angulaires le déphasage constant estimé par le procédé [2] perd sa signification.

Pour tenter d'accroître la robustesse du procédé [2], la demande de brevet [3] propose de réaliser les émissions auxiliaires avec des faisceaux plus fins que celui de l'émission principale. Dans un exemple de réalisation, les faisceaux auxiliaires sont de 2° alors que le faisceau principal est de 8°. Cependant, pour avoir tout le gain de résolution de l'antenne synthétique, il faut estimer les erreurs de phase sur tout le secteur d'émission principal de 8° et pas seulement sur un sous-secteur de 2°. Il faudrait au moins recouvrir le secteur d'émission principal par une pluralité d'émissions auxiliaires à faisceaux aussi fins que possible, les émissions étant dans des sous-bandes disjointes selon la technique connue de la formation de voies à l'émission.

Cette analyse met en évidence la limitation fondamentale du système des transducteurs déplacés. Ceux-ci n'ont pas la résolution angulaire suffisante pour estimer les variations angulaires des erreurs de phase que l'on recherche.

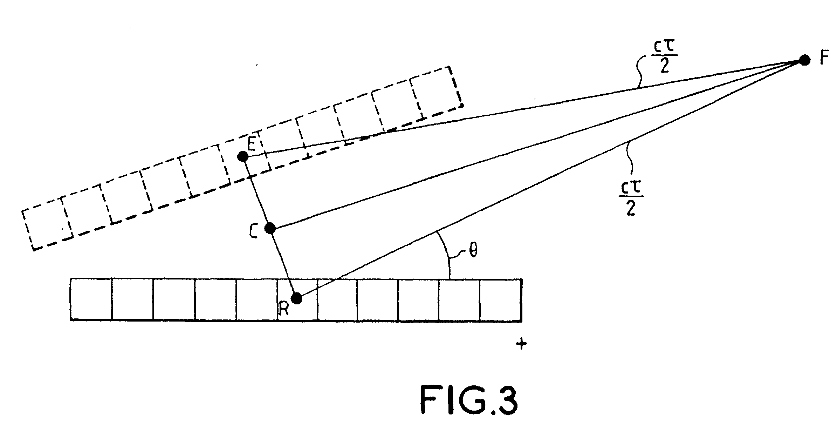

Le problème posé peut se formuler comme suit. Soit F un point du fond défini par le couple de coordonnées sonar $(u,\tau)$ relativement à la récurrence 1. On a posé $u = \cos\theta$ où $\theta$ est le gisement de F relativement à l'antenne physique et $\tau$ le retard de propagation aller-retour, comme sur la figure 3. On recherche, pour réaliser l'antenne synthétique, les coordonnées de F à la récurrence 2. Celles-ci peuvent s'écrire en fonction des coordonnées $(u,\tau)$ à la récurrence 1 sous la forme:

$$u+\Delta u(u,\tau),\ \tau+\Delta\tau\ (u,\tau) \qquad (1)$$

Le problème posé est celui de l'estimation des décalages $\Delta u$ et $\Delta\tau$ de (1), pour tout $(u,\tau)$ de l'image physique n°1, à partir des seuls signaux sonar. Il se pose de manière identique pour tous les modes synthétiques réalisés avec une antenne linéaire (sonar latéral, sonar frontal...) et notamment pour les modes décrits précédemment.

Il se pose également de la même manière pour toutes les applications visant à apparier précisément deux images d'une même zone du fond à des fins de recalage de navigation ou de désignation d'objectif. On connaît pour ce faire de nombreuses techniques de traitement d'images, utilisées pour des images radar ou optiques, basées sur l'extraction de points remarquables des images n°1 et n°2 et leur appariement. Cependant ces techniques ne fonctionnent pas sur un fond plat de réverbération uniforme, ce qui est une limitation en sonar où la densité des points remarquables (souvent d'origine humaine) est bien moins importante qu'en radar. Les techniques de traitement d'images visant à faire l'intercorrélation des deux images n'ont pas cette limitation mais butent sur d'autres difficultés. D'une part les décalages $\Delta u$ et $\Delta\tau$ ne sont pas constants sur l'image, et d'autre part le coefficient de corrélation de ces images est faible, voisin de 1-2vT/L pour un sonar latéral sur fond de réverbération uniforme.

On connaît aussi, d'un brevet US n° 4,635,240 délivré à la société Westinghouse le 6 janvier 1987, ayant pour inventeurs G. Geohegan et C. W. Allen [4], un système de navigation utilisant un sonar frontal pour estimer l'amplitude et la direction du déplacement horizontal du porteur entre deux récurrences. Ce procédé exploite l'intercorrélation de voies formées avec l'antenne physique en supposant l'antenne stabilisée en attitude, le mouvement vertical du porteur connu, ainsi que la hauteur d'eau. Le fond est, de plus, supposé plat. A la différence du procédé selon l'invention, ce procédé nécessite l'aide de capteurs de navigation et fait des hypothèses sur le relief, ce qui le rend trop imprécis pour les applications envisagées ici. De plus il ne traite pas le cas du sonar latéral.

Pour résoudre le problème posé, l'invention propose un procédé de recalage d'images sonar au moyen de sous-antennes, principalement caractérisé en ce que l'on choisit sur deux récurrences successives n°1 et n° 2, pour un point F déterminé par ses coordonnées dans l'image sonar à la récurrence n°1, deux portions égales de l'antenne physique situées aux extrémités opposées de celle-ci et formant deux sous-antennes, que l'on forme avec la première sous-antenne une première voie pointée sur F, et avec la deuxième sous-antenne une pluralité de deuxièmes voies réparties sur un secteur suffisamment large pour contenir F, et que l'on retient celle des deuxièmes voies qui maximise le pic d'intercorrélation entre la première voie et chacune des deuxièmes voies, ce qui détermine, conjointement avec les deux sous-antennes, les coordonnées de F dans l'image sonar à la récurrence n°2.

Selon une autre caractéristique,on répète ces opérations pour les deux sens de déplacement et pour une pluralité de tailles de sous-antenne, pour retenir le sens et la taille qui maximise les dits maxima des pics d'intercorrélation.

Selon une autre caractéristique, on répète ces opérations pour une grille de points F de l'image sonar à la récurrence n°1, ce qui permet d'utiliser les grandeurs estimées pour un point voisin de F comme conditions initiales et de recaler l'ensemble des deux images entre les récurrences successives.

Selon une autre caractéristique, on fait une estimation conjointe pour tout un sous-ensemble de points de la grille, en introduisant un modèle paramétrique des variations des grandeurs recherchées sur le sous-ensemble.

Selon une autre caractéristique, on utilise en outre au moins un émetteur supplémentaire et au moins un code d'émission supplémentaire.

D'autres particularités et avantages de l'invention apparaîtront clairement dans la description suivante, présentée à titre d'exemple non limitatif en regard des figures annexées qui représentent :

- la figure 1, une représentation d'un transducteur déplacé en réception utilisé par l'art antérieur;
- la figure 2, une vue du fond de la mer obtenue à l'aide d'un sonar présentant un pilonnement vertical, permettant de mettre en évidence les limitations de l'art antérieur;
- la figure 3, une vue d'une antenne physique à l'émission et à la réception, permettant de définir les paramètres utilisés;

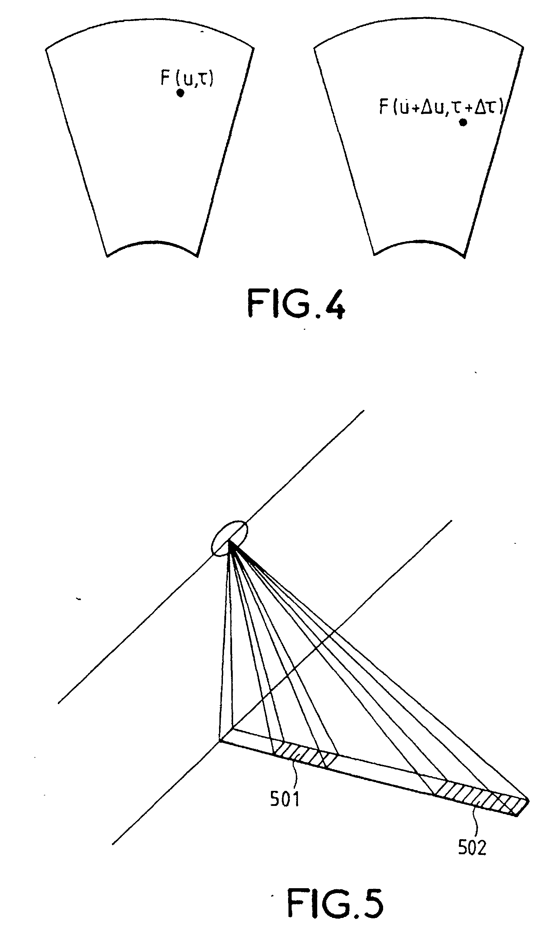

- la figure 4, deux images sonar successives obtenues avec l'antenne physique, permettant d'illustrer le déplacement dans l'image d'un écho de fond;
- la figure 5, une représentation des tranches temporelles sur lesquelles s'effectuent les intercorrelations permettant d'estimer les décalages;

- la figure 6, une représentation d'une sous-antenne déplacée en réception entre les récurrences n°1 et n°2, de la première voie pointée sur un écho de fond F, et d'une pluralité de deuxièmes voies permettant la recherche de F à la récurrence n°2;
- la figure 7, un schéma permettant d'illustrer les changements de coordonnées sonar entre l'antenne et la sous-antenne;
- la figure 8, une représentation des positions des centres de phase déplacés relatifs à l'invention et à l'art antérieur;
- la figure 9, une représentation du déplacement de la sous-antenne pour un sonar frontal et pour un écho de fond à bâbord; et
- la figure 10, une représentation de la sous-antenne dans le cas où le déplacement est effectué simultanément à l'émission et à la réception et où l'antenne physique se déplace de plus que U2 entre deux récurrences consécutives.

L'innovation consiste à former des voies construites avec une sous-antenne déplacée en réception. La formation de voies apporte une réponse immédiate aux problèmes liés au manque de résolution angulaire identifiés ci-dessus car elle permet de tirer parti de la directivité de la sous-antenne pour estimer les variations angulaires recherchées. Sur fond non-uniforme (fonds texturés conduisant à une modulation de la réverbération, transitions entre fonds différents, ombres ou échos de cibles, etc..) la formation de voies permet d'utiliser le gain de sous-antenne pour améliorer le rapport signal à bruit, d'où un gain de précision d'estimation qui s'ajoute au gain de résolution angulaire précédent.

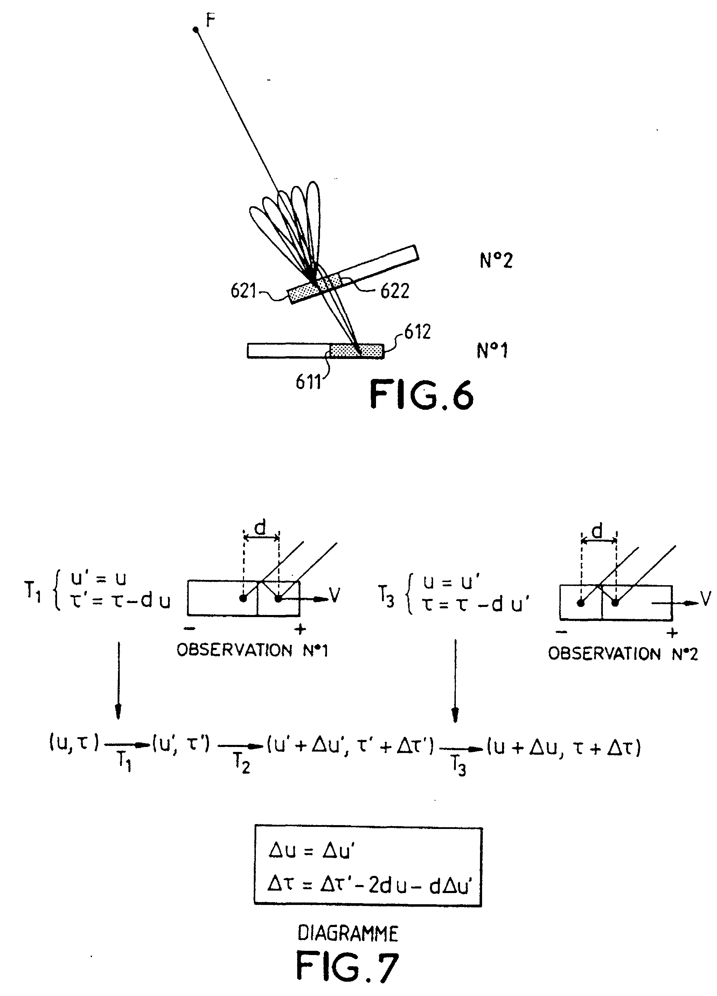

Un premier mode de mise en oeuvre concerne les antennes linéaires synthétiques. Pour estimer les décalages $\Delta u$ et $\Delta \tau$ relatifs à un point F donné, défini par ses coordonnées sonar $(u, \tau)$ à la récurrence n°1, on commence par construire une sous-antenne déplacée en réception. Aux récurrences n°1 et n°2, la sous-antenne est en butée du réseau aux deux extrémités opposées de celui-ci de telle façon que son déplacement entre les observations n°1 et n°2 s'effectue dans le sens opposé au déplacement latéral du sonar comme sur la figure 6. Le seul paramètre restant pour définir complètement la sous-antenne est donc sa taille. On commence par choisir arbitrairement une taille initiale, par exemple L-2vT. On forme ensuite, avec la sous-antenne à la récurrence n°1, une première voie pointée sur F, sur une tranche temporelle courte centrée sur F. Ces tranches, représentées sur la figure 5, contiennent suffisamment d'échantillons indépendants pour estimer le retard d'intercorrélation avec la précision requise, mais restent néanmoins suffisamment courtes pour que la variation de la direction radiale à l'intérieur d'une tranche soit négligeable. Leur taille varie donc aussi avec $\tau$, les tranches pouvant être plus longues en fin de portée (502) qu'en début de portée (501).

On forme ensuite, avec la sous-antenne à la récurrence n°2, une pluralité de deuxièmes voies au voisinage d'une estimation initiale du gisement de F à la récurrence n°2 (en l'absence d'une telle estimation on forme les voies sur le secteur d'émission entier) comme sur la figure 6. On intercorrèle ensuite ces deuxièmes voies avec la première voie et on retient la deuxième voie qui maximise le pic d'intercorrélation. L'intercorrélation s'effectue selon des techniques tout à fait classiques en interférométrie à large bande passante B, utilisées par ailleurs en sonar pour la localisation acoustique, et qui consistent. à exploiter conjointement le retard d'intercorrélation, mesuré à une fraction de 1/B, et la phase au pic d'intercorrélation pour obtenir une estimée plus précise de ce retard. Les opérations précédentes sont ensuite répétées un nombre arbitraire de fois, en faisant varier la taille de la sous-antenne et en retenant celle qui réalise le maximum des pics d'intercorrélation. Par suréchantillonnage spatial et interpolation, on peut affiner l'estimation de la taille optimale à une fraction de la dimension d'un transducteur.

Les décalages en gisement $\Delta u'$ et le retard d'intercorrélation $\Delta \tau'$ entre les premières et deuxièmes voies retenues, correspondant à la sous-antenne optimale, s'interprètent comme les décalages de F exprimés dans un système de coordonnées sonar attaché à la sous-antenne. Pour passer aux décalages $\Delta u$ et $\Delta \tau$, relatifs au système de coordonnées attaché à l'antenne entière, il faut réaliser les changements de coordonnées permettant de passer, à l'observation n°1, de l'antenne à la sous-antenne et le passage inverse à l'observation n°2. Ces changements de coordonnées sont tout à fait connus et sont résumés sur la figure 7.

Les opérations précédentes sont ensuite répétées pour une grille de points F recouvrant l'image physique n°1. Les décalages $\Delta u$ et $\Delta \tau$, ainsi que la taille de la sous-antenne déplacée, estimés pour un point voisin de F, fournissent alors d'excellentes conditions initiales pour l'estimation des mêmes grandeurs relatives à F.

La résolution angulaire de l'estimation est fixée par la taille de la sous-antenne, et la résolution temporelle par celle des tranches temporelles. Ces résolutions fixent également les dimensions maximales des mailles de la grille d'estimation, les décalages estimés pouvant être lissés et interpolés de manière à reconstruire une estimée au pas, en général beaucoup plus fin, de l'image synthétique.

Dans une extension du procédé, on effectue une estimation conjointe, pour un sous-ensemble U des points de la grille, des grandeurs estimées précédemment séparément pour chaque point F (à savoir la meilleure taille de sous-antenne, le décalage en gisement et le retard d'intercorrélation entre la première voie et la meilleure deuxième voie). Pour ce faire, on introduit un modèle paramétrique des variations sur U de ces grandeurs (par exemple ces grandeurs sont constantes, ou bien certaines varient sur U linéairement en u et $\tau$). Ensuite on somme, pour tous les points de U, les intercorrélations entre les premières et les deuxièmes voies, en tenant compte des variations du modèle, et on recherche les paramètres du modèle qui maximisent cette somme. Cette extension permet d'augmenter le nombre de points indépendants dans les intercorrélations, et donc la précision d'estimation, tout en limitant les instationnarités liées aux variations de la direction radiale dans U.

Lorsque le secteur émission est suffisamment étroit pour que les grandeurs estimées puissent être supposées constantes sur tout le secteur, ou bien lorsque l'on se ramène à ce cas par un filtrage spatial préalable, on peut ainsi réaliser une estimation conjointe pour tous les points de la grille dans une même tranche temporelle. Un cas particulier de l'extension précédente consiste à découper l'image physique n° 1 en tranches temporelles et à former, pour chaque tranche temporelle, deux images sonar avec les sous-antennes n° 1 et n°2, et à les intercorréler. On recherche ensuite les deux coordonnées sonar du pic de cette intercorrélation bidimensionnelle et on fait varier la taille de sous-antenne pour retenir celle qui réalise le maximum des pics d'intercorrélation. Pour terminer on utilise les relations de la figure 7, où $\Delta u'$ et $\Delta \tau'$ sont donnés par les coordonnées sonar du pic d'intercorrélation.

Une variante consiste à former des transducteurs fictifs dont les signaux sont les intercorrélations, sur les tranches temporelles précédentes, des transducteurs appariés des sous-antennes n°1 et n°2. On apparie ainsi le transducteur à l'extrémité 611 de la sous-antenne n°1 avec le transducteur à l'extrémité 621 de la sous-antenne n°2 et ainsi de suite, de proche en proche, jusqu'aux transducteurs aux extrémités 612 et 622. On considère ensuite l'ensemble de ces transducteurs fictifs comme une sous-antenne fictive, avec laquelle on forme une image sonar dans laquelle on recherche le point d'amplitude maximum. On fait ensuite varier la taille de sous-antenne pour retenir celle qui réalise le maximum maximorum. Pour terminer on utilise les relations de la figure 7, où $\Delta u'$ et $\Delta \tau'$ sont donnés par les coordonnées sonar de ce dernier maximum. Cette variante est équivalente à la précédente sur fond de réverbération uniforme, mais moins précise dans le cas général, car on ne tire pas parti du gain de sous-antenne pour améliorer le rapport signal à bruit.

Il est également possible, quoique moins précis, d'estimer séparément la taille de sous-antenne en utilisant l'antenne physique comme un loch à corrélation spatiale. On connaît ces lochs, qui consistent à intercorréler deux à deux les transducteurs aux récurrences n° 1 et n°2 pour retenir une paire qui réalise le maximum de corrélation. La taille de la sous-antenne est alors l-$\Delta R$, où $\Delta R$ est la distance entre les deux transducteurs d'une telle paire, mesurée le long de l'antenne physique. Cette méthode peut aussi être utilisée pour déterminer une taille initiale de sous-antenne dans toutes les variantes du procédé.

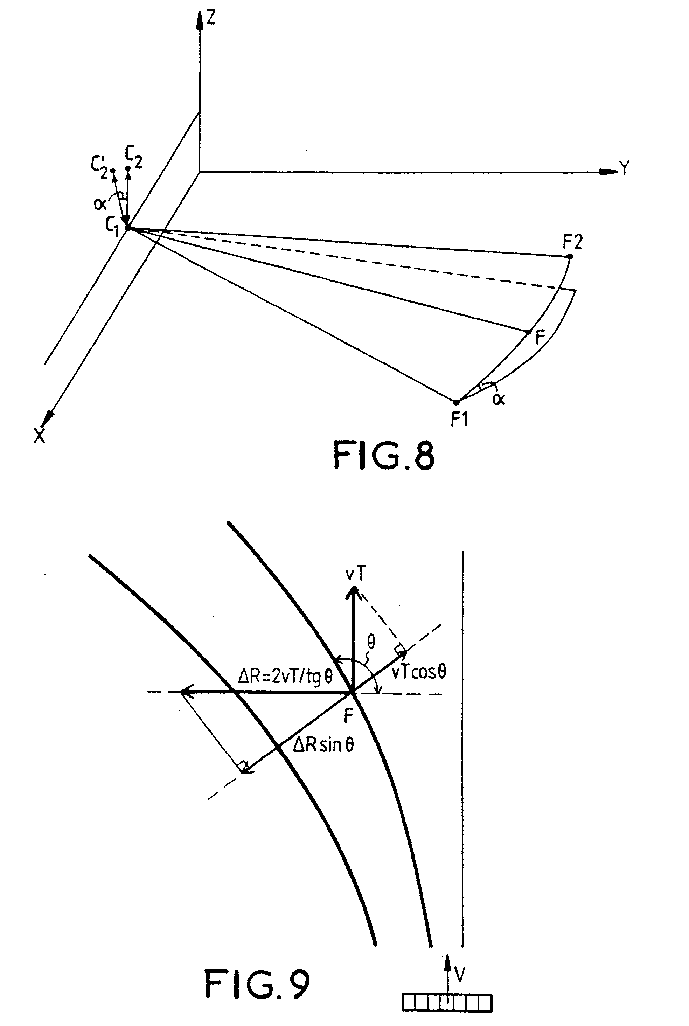

Dans l'invention le déplacement en réception $\Delta R$ tient compte des erreurs de mouvement et du relief du fond à la différence de l'art antérieur. Pour voir cela on se replace dans les conditions de la discussion précédente autour de la figure 2, en supposant de plus que la sous-antenne est suffisamment résolvante pour découper une zone du fond approximativement plane mais inclinée d'un angle $\alpha$ relativement au plan horizontal Oxy comme sur la figure 8. $C_2$ est, comme sur la figure 2, la position du deuxième centre de phase préconisé par l'art antérieur alors que $C_2'$ est la deuxième position préconisée par l'invention, celle qui réalise le maximum de corrélation. En effet $F_1$ et $F_2$ ne sont pas au même gisement relativement à la base interférométrique $C_1 C_2$, de sorte qu'ils peuvent être résolus si l'amplitude du pilonnement et l'inclinaison du fond sont suffisants. Autrement dit l'erreur de phase n'est pas la même pour tous les points de la cellule de résolution, notamment pour $F_1$ et pour $F_2$, ce qui conduit à une décorrélation partielle des signaux de réverbération en $C_1$ et $C_2$. Il en est autrement de la base interférométrique $C_1 C_2'$ dont l'axe est perpendiculaire au fond de manière à ramener $F_1$ et $F_2$, et tous les points de la cellule de résolution, au même gisement relativement à $C_1 C_2'$. L'erreur de phase est alors la même pour tous les diffuseurs, ce qui restaure la corrélation.

Le procédé s'étend à tous les modes synthétiques réalisés avec une antenne linéaire et notamment au sonar frontal. La seule différence est le sens du déplacement en réception. Pour un sonar latéral, celui-ci est toujours le même pour tous les points F et il est opposé au mouvement du porteur. Pour un sonar frontal, le déplacement vise à annuler la composante du mouvement perpendiculaire, dans le plan tangent en F au fond, à l'hyperbole isogisement passant par F. On voit sur la figure 9 qu'il faut se déplacer de tribord à bâbord pour un écho de fond F à bâbord et vice-versa. Pour un point F proche de l'axe central, les erreurs de mouvement font que le sens du déplacement n'est pas évident à déterminer a priori. Dans ce cas on applique le procédé précédent simultanément à deux sous-antennes déplacées dans des sens opposés et on retient le sens pour lequel le pic de corrélation est maximum.

Une contrainte fondamentale de mise en oeuvre du procédé reste la taille L-$\Delta R$ de la sous-antenne qui doit être la plus grande possible pour améliorer la directivité et par conséquent la qualité de l'estimation. La taille exacte dépend de F et des erreurs de mouvement mais, lorsque les erreurs sont petites, reste voisine de celle en l'absence d'erreurs. Ainsi pour le sonar latéral, $\Delta R$ reste voisin de 2vT de sorte qu'il est nécessaire, comme on l'a vu, de suréchantillonner l'antenne synthétique pour avoir une résolution angulaire suffisante. Pour le sonar frontal, $\Delta R$ est voisin 2vT/tg$\theta$, comme on le voit sur la figure 9. La taille de la sous-antenne est donc voisine de L dans l'axe central d'émission, mais elle décroît vers les extrémités du secteur, ce qui limite l'ouverture de celui-ci.

On peut s'affranchir de ces limitations en mettant en oeuvre les émissions auxiliaires comme dans l'art antérieur, notamment en utilisant le mode à émission alterné bifréquence introduit dans [3]. Aussi bien pour le sonar latéral que le sonar frontal, tout déplacement à l'émission de ΔE dans le sens approprié, où ΔE est la séparation entre les émetteurs, permet de réduire d'autant l'amplitude du déplacement supplémentaire à effectuer en réception. On allonge donc de ΔE la taille de la sous-antenne par rapport au cas où le déplacement est effectué uniquement en réception.

Ainsi pour le sonar latéral classique, où l'on se déplace de D-L/2 entre deux récurrences, on peut utiliser une taille de sous-antenne voisine de ΔE. Il n'est donc pas intéressant de réduire l'ouverture du secteur d'émission. Dans l'exemple de réalisation de [3] rappelé ci-dessus, on émet donc dans le secteur entier de 8° et on recouvre ce secteur par une pluralité de voies en réception dont la résolution est, pour les valeurs retenues dans [3], voisine de 0.2°, ce qui est meilleur que la formation de voies à l'émission.

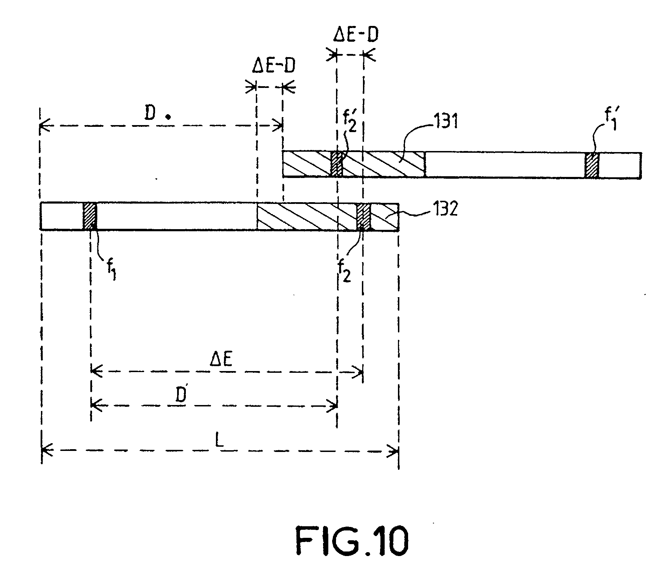

Le procédé reste applicable même pour un sonar latéral se déplaçant de D>L/2, c'est à dire lorsque l'antenne synthétique est classiquement sous-échantillonnée, avec une taille de sous-antenne voisine de L-2D+ΔE comme sur la figure 10. La demande de brevet n° 96 15157 déposée le 10.12.96 décrit une antenne synthétique pour laquelle un tel déplacement est envisagé.

Sur cette figure 10, on a représenté seulement les deux fréquences $f_1$ et $f_2$ auxiliaires servant à l'autofocalisation ($f_2$ pour la paire de récurrences de la figure) et pas la fréquence servant à l'imagerie.

Ce mode d'émission auxiliaire bifréquence est également utilisable pour un sonar frontal. On peut, par exemple, diviser le secteur émission en trois sous-secteurs égaux. Dans le sous-secteur voisin de l'axe central, l'autofocalisation s'effectue dans la sous-bande principale avec une sous-antenne de taille proche de L. Dans chacun des deux autres sous-secteurs on utilise une des deux sous-bandes auxiliaires 1 et 2 : si le centre de phase de l'émetteur auxiliaire émettant le code 1 se déplace de bâbord à tribord, on utilise la sous-bande 1 dans le sous-secteur à tribord, et vice-versa.

L'extension de l'ensemble du procédé à un nombre quelconque K de récurrences se fait de proche en proche : pour recaler 1 et K, on recale 1 et 2, puis 2 et 3,..., puis K-1 et K. Lorsque la bande passante des erreurs de mouvement et des fluctuations du milieu est plus petite que la fréquence de récurrence, les estimations peuvent être filtrés passe-bas pour améliorer la précision.

Dans un exemple de réalisation, on considère un mode synthétique d'un sonar latéral de surveillance. Le sonar fonctionne autour de 400kHz avec une antenne de $L_r$=1.60m. En mode physique, ce sonar permet d'opérer à une vitesse maximum voisine de 10 noeuds avec une résolution de 20cm environ à la portée maximale de 100m. Le mode linéaire synthétique permet une résolution de 5cm à 100m à la même vitesse de 10 noeuds à condition d'élargir le secteur émission, par exemple à 5° pour éviter toute stabilisation à l'émission, et de disposer de deux émetteurs dont les centres sont séparés latéralement de ΔE=1m 30 environ. Un de ces deux émetteurs émet le code principal et les deux émetteurs émettent en alternance les deux codes auxiliaires. La bande passante des trois émissions est de l'ordre de 10kHz. La taille minimale des zones isoplanétiques est alors de l'ordre de 20 cm à 100 m.

## Revendications

1. Procédé de recalage d'images sonar au moyen de sous-antennes, caractérisé en ce que l'on choisit sur deux récurrences successives n°1 et n°2, pour un point F déterminé par ses coordonnées dans l'image sonar à la récurrence n°1, deux portions égales de l'antenne physique situées aux extrémités opposées de celle-ci et formant deux sous-antennes, que l'on forme avec la première sous-antenne une première voie pointée sur F, et avec la deuxième sous-antenne une pluralité de deuxièmes voies réparties sur un secteur suffisamment large pour contenir F, et que l'on retient celle des deuxièmes voies qui maximise le pic d'intercorrélation entre la première voie et chacune des deuxièmes voies, ce qui détermine, conjointement avec les deux sous-antennes, les coordonnées de F dans l'image sonar à la récurrence n°2.

2. Procédé selon la revendication 1, caractérisé en ce que l'on répète ces opérations pour les deux sens de déplacement et pour une pluralité de tailles de sous-antenne, pour retenir le sens et la taille qui maximise les dits maxima des pics d'intercorrélation.

3. Procédé selon l'une quelconque des revendications 1 et 2, caractérisé en ce que l'on répète ces opérations pour une grille de points F de l'image sonar à la récurrence n°1, ce qui permet d'utiliser les grandeurs estimées pour un point voisin de F comme conditions initiales et de recaler l'ensemble des deux images entre les récurrences successives.

4. Procédé selon l'une quelconque des revendications 1 à 3, caractérisé en ce que l'on fait une estimation conjointe pour tout un sous-ensemble de points de la grille, en introduisant un modèle paramétrique des variations des grandeurs recherchées sur le sous-ensemble.

5. Procédé selon l'une quelconque des revendications 1 à 4, caractérisé en ce que l'on utilise en outre au moins un émetteur supplémentaire et au moins un code d'émission supplémentaire.

**Claims**

1. Method for realigning sonar images by means of sub-antennas, characterised by choosing, over two successive recurrences Nos. 1 and 2, for a point F determined by its coordinates in the sonar image at recurrence No. 1, two equal portions of the physical antenna that are situated at the opposite ends thereof and that form two sub-antennas, forming with the first sub-antenna a first channel aimed at F, and with the second sub-antenna a plurality of second channels distributed over a sector sufficiently broad to contain F, and retaining that one of the second channels which maximises the intercorrelation peak between the first channel and each of the second channels, thereby determining, in conjunction with the two sub-antennas, the coordinates of F in the sonar image at recurrence No. 2.

2. Method according to claim 1, characterised in that these operations are repeated in respect of both directions of displacement and in respect of a plurality of sub-antenna sizes, in order to retain the direction and size that maximises said maximum intercorrelation peak values.

3. Method according to either of claims 1 and 2, characterised in that these operations are repeated in respect of a grid of points F of the sonar image at recurrence No. 1, thereby enabling the magnitudes estimated in respect of a neighbouring point of F to be used as initial conditions and the set of the two images to be realigned between the successive recurrences.

4. Method according to any of claims 1 to 3, characterised by making a joint estimate in respect of a whole sub-set of points of the grid, by introducing a parametric model of the variations in the sought magnitudes over the sub-set.

5. Method according to any of claims 1 to 4, characterised by furthermore using at least one additional transmitter and at least one additional transmission code.

**Patentansprüche**

1. Verfahren zum Neueinstellen von Sonarbildern mittels Unterantennen, dadurch gekennzeichnet, daß für zwei aufeinanderfolgende Rekursionen Nr. 1 und Nr. 2 für einen Punkt F, der durch seine Koordinaten im Sonarbild mit der Rekursion Nr. 1 bestimmt ist, zwei gleiche Abschnitte der physischen Antenne, die sich an ihren gegenüberliegenden Enden befinden und zwei Unterantennen bilden, gewählt werden, daß mit der ersten Unterantenne ein erster Weg, der auf F gerichtet ist, gebildet wird und mit der zweiten Unterantenne mehrere zweite Wege, die in einem ausreichend breiten Sektor, der F enthält, verteilt sind, gebildet werden und daß derjenige der zweiten Wege gewählt wird, der die Interkorrelationsspitze zwischen dem ersten Weg und jedem der zweiten Wege maximal macht, wodurch mit den beiden Unterantennen zusammen die Koordinaten von F im Sonarbild mit der Rekursion Nr. 2 bestimmt werden.

2. Verfahren nach Anspruch 1, dadurch gekennzeichnet, daß diese Operationen für beide Verschiebungsrichtungen und für mehrere Abmessungen der Unterantenne wiederholt werden, um die Richtung und die Abmessung zu wählen, die die genannten Maxima der Interkorrelationsspitzen maximal macht.

3. Verfahren nach einem der Ansprüche 1 und 2, dadurch gekennzeichnet, daß diese Operationen für ein Gitter von Punkten F des Sonarbildes mit der Rekursion Nr. 1 wiederholt werden, so daß die geschätzten Größen für einen benachbarten Punkt von F als Anfangsbedingungen verwendet werden können und die Gesamtheit der zwei Bilder zwischen den aufeinanderfolgenden Rekursionen neu eingestellt werden kann.

4. Verfahren nach einem der Ansprüche 1 bis 3, dadurch gekennzeichnet, daß eine gemeinsame Schätzung für eine gesamte Untereinheit von Punkten des Gitters erfolgt, indem ein parametrisches Modell der Änderungen der Größen, die in der Untereinheit gesucht werden, eingeführt wird.

5. Verfahren nach einem der Ansprüche 1 bis 4, dadurch gekennzeichnet, daß außerdem wenigstens ein zusätzlicher Sender und wenigstens ein zusätzlicher Sendecode verwendet werden.

RÉCURRENCE 1

RÉCURRENCE 2

$T_2 = R$    $T_1 = E$

$T_3 = R$    $T_2$    $T_1 = E$

$\dot{C}$

$vT$    $vT$

$\Delta R$

RÉC. 1 : ON ÉMET EN $T_1$ ET ON REÇOIT EN $T_2$

RÉC. 2 : ON ÉMET EN $T_1$ ET ON REÇOIT EN $T_3$
   ($T_1$ ET $T_2$ SE SONT DÉPLACÉS DE 2 $vT$)

# FIG.1

FIG.2

FIG.3

EP 0 953 157 B1

FIG.4

FIG.5

EP 0 953 157 B1

FIG.6

$$T_1 \begin{cases} u' = u \\ \tau' = \tau - d\,u \end{cases}$$

OBSERVATION N°1

$$T_3 \begin{cases} u = u' \\ \tau = \tau - d\,u' \end{cases}$$

OBSERVATION N°2

$$(u, \tau) \xrightarrow[T_1]{} (u', \tau') \xrightarrow[T_2]{} (u' + \Delta u', \tau' + \Delta \tau') \xrightarrow[T_3]{} (u + \Delta u, \tau + \Delta \tau)$$

$$\Delta u = \Delta u'$$
$$\Delta \tau = \Delta \tau' - 2d\,u - d\Delta u'$$

DIAGRAMME

FIG.7

13

FIG.8

FIG.9

FIG.10